(19) Europäisches Patentamt
European Patent Office
Office européen des brevets

(11) **EP 1 669 549 A1**

(12) **EUROPÄISCHE PATENTANMELDUNG**

(43) Veröffentlichungstag:
**14.06.2006 Patentblatt 2006/24**

(51) Int Cl.:
*F01D 21/00* (2006.01)       *G07C 3/02* (2006.01)
*G05B 23/00* (2006.01)

(21) Anmeldenummer: **04029099.1**

(22) Anmeldetag: **08.12.2004**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **SIEMENS AKTIENGESELLSCHAFT**
**80333 München (DE)**

(72) Erfinder: **Bode, Andreas**
**91315 Höchstadt (DE)**

(54) **Verfahren zur Überwachung des Zustandes von Turbinen anhand ihrer Ausrollzeit**

(57)     Ein Verfahren zur Überwachung des Zustandes von Turbinen anhand ihrer Ausrollzeit soll möglichst empfindlich und mit geringem Aufwand durchführbar sein. Dazu wird die gemessene Ausrollzeit ($t_{gemessen}$) mit einem Korrekturglied, in das die ebenfalls gemessene Temperatur ($T_{Medium}$) des in der Turbine befindlichen Mediums einbezogen wird, korrigiert und mit einem Referenzwert verglichen.

EP 1 669 549 A1

**Beschreibung**

Die Erfindung bezieht sich auf ein Verfahren zur Überwachung des Zustandes von Turbinen anhand ihrer Ausrollzeit.

Die Ausrollzeit einer Turbine, beispielsweise einer Gas- oder Dampfturbine, ist definiert als die Zeit, die zwischen dem Abschalten des Turbinenantriebes und dem Erreichen eines unteren Grenzwertes der Turbinendrehzahl vergeht. Sie ist vom mechanischen Zustand der Turbine abhängig und wird beispielsweise vom Zustand der Lager und ihrer Versorgung mit Öl oder von der Ventilation oder eventuellem Anstreifen der Turbinenschaufeln beeinflusst.

Daher lässt sich die Ausrollzeit einer Turbine zur Überwachung des Zustandes der Turbine und somit als Indikator für Maschinenprobleme nutzen. Technische Probleme können auf diese Weise bereits früh erkannt und beseitigt werden, bevor dauerhafte Schäden auftreten.

Die Ausrollzeit von Turbinen wird daher manuell oder automatisch ermittelt und mit einem Referenzwert verglichen. Abweichungen der gemessenen Ausrollzeit vom Referenzwert können auf Maschinenprobleme hindeuten und müssen näher untersucht werden. Allerdings wird die Ausrollzeit einer Turbine auch durch die aktuelle Temperatur des Mediums in der Turbine (Ansaugluft bei Gasturbinen bzw. Wasserdampf bei Dampfturbinen) beeinflusst. Diese Temperatur ist jedoch natürlichen oder betriebsbedingten Schwankungen unterworfen, die zu Schwankungen von etwa 5 % bis 10 % in der gemessenen Ausrollzeit führen. Eine Schwankungsbreite von 5 % bis 10 % ist jedoch zu groß, um einen aussagekräftigen Vergleich mit dem Referenzwert und damit eine empfindliche Überwachung des Ausrollvorganges zu ermöglichen.

Der Erfindung liegt daher die Aufgabe zugrunde, ein Verfahren zur Überwachung des Zustandes von Turbinen anhand ihrer Ausrollzeit anzugeben, das besonders empfindlich und gleichzeitig mit möglichst geringem technischen Aufwand durchführbar ist.

Diese Aufgabe wird erfindungsgemäß dadurch gelöst, dass die gemessene Ausrollzeit mit einem Korrekturglied, in das die ebenfalls gemessene Temperatur des in der Turbine befindlichen Mediums einbezogen wird, korrigiert und mit einem Referenzwert verglichen wird.

Die Erfindung geht dabei von der Überlegung aus, dass für eine möglichst empfindliche Überwachung des Ausrollvorganges Einflussfaktoren auf die Ausrollzeit mit einer nicht vernachlässigbaren natürlichen Schwankung zur Korrektur der gemessenen Ausrollzeit herangezogen werden sollten. Auf diese Weise lässt sich ihr Einfluss aus der gemessenen Ausrollzeit herausrechnen und eine geringere Schwankungsbreite der Ausrollzeit und somit eine empfindlichere Überwachung erzielen. Ein besonders wichtiger und mit einer besonders großen Schwankungsbreite behafteter Einflussfaktor auf die Ausrollzeit ist die Temperatur des Mediums in der Turbine. Sie sollte daher erfasst und zur Korrektur der gemessenen Ausrollzeit herangezogen werden.

Die mit der Erfindung erzielten Vorteile bestehen insbesondere darin, dass mit sehr geringem Aufwand eine deutliche Reduzierung der Schwankungsbreite der ermittelten Ausrollzeit erzielt werden kann. Die Temperatur des Mediums in der Turbine liegt nämlich entweder ohnehin als Betriebsmessung vor oder ist verhältnismäßig einfach zu erfassen.

Durch die Korrektur der gemessenen Ausrollzeit mit der Temperatur des Mediums, die eine Art Normierung der Ausrollzeit mit der Temperatur darstellt, kann die Schwankungsbreite der ermittelten Ausrollzeit von etwa 5 % bis 10 % auf etwa 1 % bis 2 % reduziert werden. Das Ergebnis ist eine wesentlich empfindlichere Überwachung des Ausrollvorganges und damit des mechanischen Zustandes der Turbine. Maschinenprobleme, die zu dauerhaften schweren Schäden an der Turbine führen können, können auf diese Weise noch früher erkannt und behoben werden.

Vorteilhafterweise wird der Referenzwert für die Ausrollzeit ebenfalls mit der Temperatur der Ansaugluft oder des Wasserdampfes korrigiert. In diesem Fall weist nämlich auch der Referenzwert einen geringen Fehler auf und ist damit aussagekräftiger als ohne die Korrektur.

Die Korrektur der gemessenen Ausrollzeit erfolgt vorteilhafterweise dadurch, dass die Temperatur des Mediums in der Turbine mit einem Korrekturfaktor a multipliziert und zur gemessenen Ausrollzeit hinzuaddiert wird.

Der Korrekturfaktor a beschreibt den Einfluss, den die Temperatur des Mediums in der Turbine auf die Ausrollzeit der Turbine hat, und kann einen positiven oder einen negativen Wert annehmen. Er ist von der jeweiligen Turbine abhängig und muss zunächst ermittelt werden. Dazu können beispielsweise in einem Testlauf der Turbine sowohl die Ausrollzeiten als auch die Temperaturen des Mediums in der Turbine erfasst werden. Anschließend wird der Korrekturfaktor a ermittelt, der für die Gesamtheit der betrachteten Ausrollzeiten den Temperaturgang am besten aus den Ausrollzeiten herausrechnet. Der auf diese Weise gefundene Wert für a kann anschließend routinemäßig verwendet werden. Er muss neu ermittelt werden, wenn Umbauten an der Turbine vorgenommen werden oder andere Ereignisse eintreten, die den Einfluss der Temperatur des Mediums in der Turbine auf die Ausrollzeit verändern.

Der Korrekturfaktor a wird vorteilhafterweise automatisch ermittelt. Auch der Referenzwert für die Ausrollzeit wird vorteilhafterweise automatisch ermittelt. Auf diese Weise ist eine routinemäßige, zuverlässige Überwachung des Ausrollvorganges der Turbine sichergestellt.

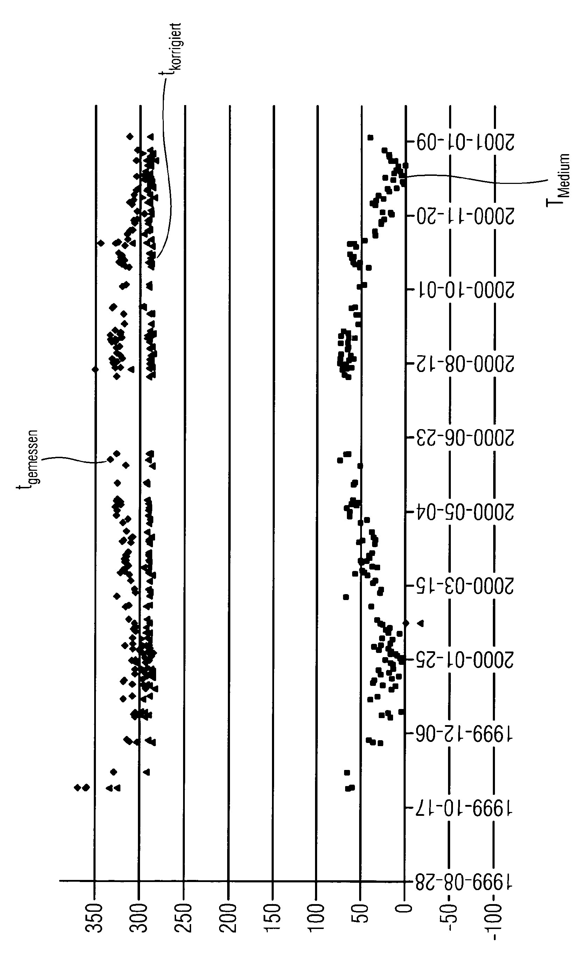

Ein Ausführungsbeispiel der Erfindung wird anhand einer Zeichnung näher erläutert. Darin zeigt die Figur anhand eines Diagramms die Korrektur des Temperatureffektes an der Ausrollzeit einer Turbine.

Die Ausrollzeit einer Turbine, also die Zeit, die die Turbine benötigt, um nach dem Abschalten des Turbinenantriebes eine Drehzahl zu erreichen, die einem festgelegten unteren Grenzwert entspricht, ist abhängig von verschiedenen Faktoren, die den mechanischen Zustand der Turbine bestimmen. Daher eignet sich die Überwachung der Ausrollzeit zur Überwachung des mechanischen Zustandes einer Turbine und zur frühen Erkennung von Schäden. Allerdings beeinflusst auch die Temperatur des Mediums in der Turbine, also Luft oder Wasserdampf, die Ausrollzeit. Dieser Temperatureffekt muss aus der gemessenen Ausrollzeit herauskorrigiert werden, um eine besonders empfindliche Überwachung sicherzustellen. Die FIG zeigt die Korrektur gemessener Ausrollzeiten auf den Temperatureffekt. Zu der gemessenen Ausrollzeit $t_{korrigiert}$ wird nach der Formel

$$t_{korrigiert} = t_{gemessen} + a*T_{Medium}$$

die mit dem Korrekturfaktor a multiplizierte Temperatur des Mediums in der Turbine $T_{Medium}$ addiert. Die FIG zeigt, dass durch diese Korrektur der Temperaturgang tatsächlich aus den gemessenen Ausrollzeiten herausgerechnet werden kann. Auf diese Weise wird eine Normierung der Ausrollzeiten auf die Temperatur des Mediums in der Turbine vorgenommen.

Die Eliminierung des Temperatureffektes aus den Ausrollzeiten führt zu einer deutlich verbesserten Vergleichbarkeit der korrigierten Ausrollzeiten $t_{korrigiert}$, so dass die korrigierten Ausrollzeiten $t_{korrigiert}$ direkt mit einem Referenzwert verglichen werden können. Die korrigierten Ausrollzeiten $t_{korrigiert}$ sind somit zur routinemäßigen Überwachung des mechanischen Zustands einer Turbine besonders gut geeignet.

**Patentansprüche**

1.   Verfahren zur Überwachung des Zustandes von Turbinen anhand ihrer Ausrollzeit, bei dem die gemessene Ausrollzeit ($t_{gemessen}$) mit einem Korrekturglied, in das die ebenfalls gemessene Temperatur ($T_{Medium}$) des in der Turbine befindlichen Mediums einbezogen wird, korrigiert und mit einem Referenzwert verglichen wird.

2.   Verfahren nach Anspruch 1, bei dem der Referenzwert für die Ausrollzeit ebenfalls mit der Temperatur ($T_{Medium}$) des in der Turbine befindlichen Mediums korrigiert wird.

3.   Verfahren nach einem der Ansprüche 1 oder 2, bei dem die Korrektur **dadurch** erfolgt, dass die Temperatur ($T_{Medium}$) des Mediums in der Turbine mit einem Korrekturfaktor (a) multipliziert und zur gemessenen Ausrollzeit ($t_{gemessen}$) hinzuaddiert wird.

4.   Verfahren nach Anspruch 3, bei dem der Korrekturfaktor (a) automatisch ermittelt wird.

5.   Verfahren nach einem der Ansprüche 1 bis 4, bei dem der Referenzwert für die Ausrollzeit ($t_{gemessen}$) automatisch ermittelt wird.

**Europäisches Patentamt**

**EUROPÄISCHER RECHERCHENBERICHT**

Nummer der Anmeldung

EP 04 02 9099

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 843 244 A (GENERAL ELECTRIC COMPANY) 20. Mai 1998 (1998-05-20) <br> * Spalte 3, Zeile 17 - Zeile 18 * <br> * Spalte 6, Zeile 22 - Zeile 33 * <br> * Spalte 6, Zeile 52 - Zeile 55 * <br> ----- | 1 | F01D21/00 <br> G07C3/02 <br> G05B23/00 |
| A | US 4 057 714 A (FORK ET AL) 8. November 1977 (1977-11-08) <br> * Spalte 1, Zeile 10 - Zeile 14 * <br> ----- | 1 | |

RECHERCHIERTE SACHGEBIETE (Int.Cl.7)

F01D
G07C

Der vorliegende Recherchenbericht wurde für alle Patentansprüche erstellt

| Recherchenort | Abschlußdatum der Recherche | Prüfer |
|---|---|---|
| Den Haag | 2. Mai 2005 | Angelucci, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 04 02 9099

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 0843244 | A | 20-05-1998 | US | 5951611 A | 14-09-1999 |
| | | | CA | 2218450 A1 | 18-05-1998 |
| | | | DE | 69724555 D1 | 09-10-2003 |
| | | | DE | 69724555 T2 | 03-06-2004 |
| | | | EP | 0843244 A1 | 20-05-1998 |
| US 4057714 | A | 08-11-1977 | DE | 2543587 A1 | 23-12-1976 |
| | | | AT | 350309 B | 25-05-1979 |
| | | | BR | 7606276 A | 23-08-1977 |
| | | | CH | 607159 A5 | 30-11-1978 |
| | | | DK | 373376 A | 31-03-1977 |
| | | | ES | 452001 A1 | 01-10-1977 |
| | | | FR | 2326745 A1 | 29-04-1977 |
| | | | GB | 1504237 A | 15-03-1978 |
| | | | IN | 144811 A1 | 15-07-1978 |
| | | | IT | 1073315 B | 17-04-1985 |
| | | | NL | 7609172 A | 01-04-1977 |
| | | | SE | 410896 B | 12-11-1979 |
| | | | SE | 7610259 A | 31-03-1977 |

EPO FORM P0461

Für nähere Einzelheiten zu diesem Anhang : siehe Amtsblatt des Europäischen Patentamts, Nr.12/82